# EUROPEAN PATENT APPLICATION

(11) **EP 4 755 744 A1**
(43) Date of publication of application: **10.06.2026**
(21) Application number: 24217132.0
(22) Date of filing: 03.12.2024
(51) Int. Cl.: B60W 30/14, B60W 30/02, B60W 50/00

(54) **METHOD FOR CONTROLLING A VEHICLE BY ACC WITH SPEEDBUMP DETECTION, ACC WITH SPEEDBUMP DETECTION SYSTEM TO CONTROL A VEHICLE**

(71) Applicant: Robert Bosch GmbH, 70442 Stuttgart (DE)
(72) Inventor: Csato, Bertalan, 1117 Budapest (HU)

(57) **Abstract**

The invention concerns a method for controlling a vehicle by an adaptive cruise control system; comprising the steps of detecting a speedbump located on the track of the vehicle; determining the distance to the speedbump, geometry of the speedbump, and the current vehicle speed; classifying the speedbump according to its geometry; choosing a speed limit based on the speedbump dass from a number of predefined speed limits; calculating, based on the current vehicle speed, distance to the speedbump and the speed limit, at which strength braking is necessary; braking the vehicle according to the calculated strength. The invention further concerns a system which may executed said method.

## Description

The invention relates to a method for controlling an adaptive cruise control system (ACC) with speedbump detection, to an adaptive cruise control system with speedbump detection and to an advanced driver assistance system (ADAS) including such an adaptive cruise control system.

### Prior Art

Adaptive Cruise Control (ACC) is a widely implemented feature in modern Advanced Driver Assistance Systems (ADAS). Presently, nearly all new vehicles are equipped with ACC, which is primarily utilized in highway driving conditions. However, ACC also holds potential as a comfort-enhancing feature in urban and rural environments, where it can be configured to maintain speeds at designated limits, such as 30 km/h in city centers, to align with local regulations.

In standard ACC implementations, if there is no vehicle directly in front, the system will maintain the preset speed irrespective of surrounding infrastructure, such as speed bumps. Consequently, the vehicle may pass over these obstacles at the set speed, potentially causing discomfort to occupants and risking damage to the undercarriage, which can negatively impact the vehicle's durability. Depending on the type of obstacle, different effects and impacts on the vehicle are to be expected and require adequate solutions.

### Disclosure of the invention

It is therefore a task of the invention to provide a method and a system for adaptive cruise control features that allow to overcome these deficits. It is a further task to provide a method and a system that allows to determine and execute - depending on the type of speedbump as an obstacle - the required action.

These tasks are solved by the method of claim 1, the adaptive cruise control system according to claim 7 and the advanced driver assistance system according to claim 9. Advantageous embodiments and further modifications of the invention are defined by the dependent claims.

The inventive method for controlling a vehicle by an adaptive cruise control system, comprises the steps of detecting a speedbump located on the track of the vehicle; determining the distance to the speedbump, geometry of the speedbump, and the current vehicle speed; classifying the speedbump according to its geometry; choosing a speed limit based on the speedbump class; calculating, based on the current vehicle speed, distance to the speedbump and the speed limit, at which strength braking is necessary; and braking the vehicle according to the calculated strength.

Braking the vehicle according to the calculated strength leads to braking the vehicle to the speed limit. The speed limit may not be a defined speed such as 20 km/h but may also be a defined speed range, such as 18-22 km/h. If it is determined that the necessary braking strength is zero, this corresponds to determining that braking is not necessary. Accordingly, the step of calculating at which strength braking is necessary may include a step of calculating if braking is necessary.

According to an embodiment of the method, it further comprises a step of determining if adaptive cruise control is set with a defined speed and a step of accelerating to the defined speed after detecting that the speedbump has been passed. This allows to maintain the defined speed, set by the user or the ACC and not lose driving speed due to the speedbump.

According to an embodiment of the method, classifying the speedbump according to its geometry includes classifying it by height and/or width in the driving direction of the vehicle and/or the slope of the approach ramp and/or the slope of the departure ramp. The speedbumps may be classified into a number of predefined classes. For example, these predefined classes may be ranges of the maximum height of the speedbump, that is detected by the method. These predefined classes may include a combination of determined features of the speedbump or may include sub-classes with another feature.

According to an embodiment of the method, it further comprises the steps of defining a reserve distance to the speedbump based on the vehicle speed and/or the chosen allowed speed limit and/or the classified speedbump class; and substracting the reserve distance from the distance to the speedbump used for calculating at which strength braking is necessary.

The step of defining a reserve distance and substracting it from the distance to the speedbump used for calculating at which strength braking is necessary may be executed before the step of calculating, based on the current vehicle speed, distance to the speedbump and the speed limit, at which strength braking is necessary. Alternatively, it may be executed after this step whereupon the step may be repeated. The reserve distance allows to calculate the braking strength in such a way that the vehicle does not brake while driving over the speedbump. In other words, as the reserve distance, e.g. 2 m, is subtracted from the distance used to calculate braking strength, the step of braking the vehicle is finished before the reserve distance to the speedbump is crossed. Accordingly, a downward pitch of the vehicle due to braking is prevented while driving over the speedbump, as this may drastically worsen the discomfort of the passengers of the vehicle or damage the vehicle.

According to an embodiment of the method, defining a reserve distance includes calculating a pitch of the vehicle when braking at the calculated strength; and calculating depending on the pitch, if a distance of the undercarriage of a front of the vehicle to the ground is less than a height defined by the classification of the speedbump, and if this is true, substracting the reserve distance from the distance to the speedbump used for calculating at which strength braking is necessary.

This allows to only substract the reserve distance if a pitch would result in a distance of the undercarriage of the vehicle to be lower than a height defined by the classification of the speedbump. This distance may be a distance that is associated with a threshold for an increased discomfort of the passengers. This distance may be the height of the speedbump. For example, if the distance is undercut, the discomfort due to driving over the speedbump may be higher than the discomfort caused by braking and thus only then, an probable increase in braking strength due to a reduced possible braking distance is acceptable. In other words, the embodiment allows to mediate between the discomfort caused by braking and the discomfort caused by driving over the speedbump with a defined pitch. Calculating the braking strength may be carried out as described to the embodiment beforehand.

According to an embodiment of the method, a first discomfort value is chosen from a set of predefined values depending on the calculated braking strength; and a second discomfort value is calculated based on the classification of the speedbump and the vehicle speed; and if the first discomfort value relates to a larger discomfort than the second discomfort value, braking the vehicle is inhibited.

This allows to only brake the vehicle, if the discomfort caused by driving over the speedbump at the vehicle speed is higher than the discomfort caused by braking.

According to an embodiment of the invention, any of the speed limit, the reserve distance, the predefined distance and the discomfort values may be predefined or chosen by the user of the vehicle. This allows to set the driving behavior of the ACC to the users preferences.

The invention further concerns an adaptive cruise control system to control a vehicle, including a sensor configured to detect a speedbump located on the track of the vehicle, determine the distance to the speedbump, and determine the geometry of the speedbump; and a controller connected to the sensor and configured execute the method according to any of the previously described embodiments.

The sensor may be a camera sensor, and the controller may be configured to classify the speedbump. As most new cars with an ACC include a camera sensor, the method may be applied and executed without the need for further components.

The invention further concerns an advanced driver assistance system including an adaptive cruise control system according to any of the previously described embodiments.

The claimed method and system lead to a driving behavior with minimal impact on the passengers. Driving with an adaptive cruise control that not only detects speedbumps but brakes the vehicle to lower the discomfort caused by driving over the speedbumps not only leads to a much more comfortable driving but also allows to protect and elongate the lifetime of the vehicle components such as the chassis components.

In the following, preferred embodiments of the method are described based on the figures.
- Fig. 1: shows a driving situation with a speedbump;
- Fig. 2: shows the steps of an embodiment of the invention;
- Fig. 3a-c: show a vehicle executing the method of fig. 2;
- Fig. 4a: shows a vehicle during braking;
- Fig. 4b: shows a vehicle executing a part of another embodiment of the invention;
- Fig. 5: shows the steps of the embodiment of the invention according to fig. 4b;
- Fig. 6: shows the steps of yet another embodiment of the invention.

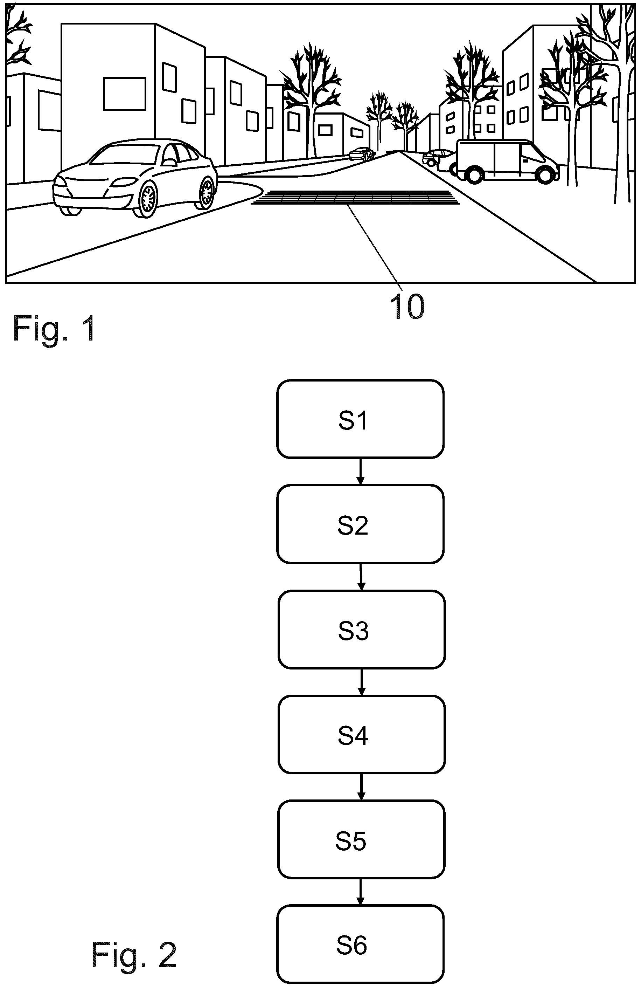

Fig. 1 shows a driving situation. In this situation a vehicle is driving through a narrow lane with a speedbump 10 before an intersection. The system according to an embodiment can detect the speedbump 10 with its sensor and execute method steps according to fig. 2.

In step S1 the speedbump 10 is detected. This may be achieved by a sensor or by a controller which is receives the information from the sensor. For example, the sensor may be a camera sensor that provides the image data to the controller or includes image detection means of its own and detects the speedbump 10. The speedbump 10 is detected as a type of obstacle on the road and detected by its typical features. This include its elongated form which is - in most cases - perpendicular to the vehicles track. It includes an approach ramp and a departure ramp with varying degrees of slope and a crest in between the ramps. Step S1 detects not only the speedbump 10 but also includes detecting if it is located on the track of the vehicle. Accordingly, only speedbumps are considered which will be crossed by the vehicle if it continues in its track.

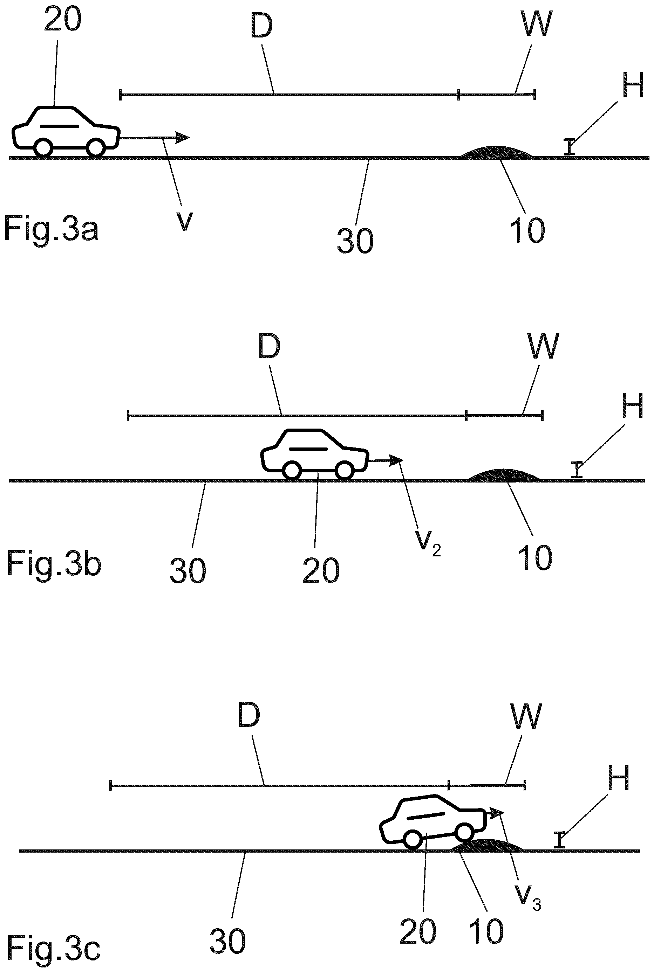

Fig. 3a shows a vehicle 20 located on a track 30. The situation may be the situation of fig. 1, with the speedbump 10 located on the track 30. The vehicle 20 will cross the speedbump 10 if it continues in its track.

After detecting the speedbump 10 located on the track 30, in step S2 the distance to the speedbump 10 is determined, as well as the geometry of the speedbump 10 and the current vehicle speed v. The distance D to the speedbump 10 is the distance from the front of the vehicle 20 to the beginning of the speedbump 10. The current vehicle speed v is visualized by the length of the arrow. The current vehicle speed v may be a defined speed of the adaptive cruise control. For example, the current speed v may be the speed which is the speed limit in the driving situation of fig. 1, e.g. 30 km/h.

The geometry of the speedbump 10 may include detecting its height H and/or width W in the driving direction of the vehicle 20 and/or the slope of the approach ramp and/or the slope of the departure ramp. Depending on the data used for speedbump detection, one or more features may be detected. Typically, the height H of the speedbump 10 and the slope of the approach ramp may be detected as these provide the most prominent features which are visible from the vehicle 20.

The detected features may be used for classifying the speedbump 10 according to its geometry in step S3. The classification may be achieved by a single feature such as the height H of the speedbump 10. Or it may be achieved by a defined number of features. For example, the classification may be achieved by sorting the speedbump 10 into a predefined class from a number of predefined classes. For example, these classes may include height ranges, such as class I: H=1-5 cm; class II: H=5-10 cm; class III H=10-15 cm; class 4: H>15 cm. Each class may include sub-classes to allow coupling of different features.

In step S4, a speed limit v₃ is chosen based on the speedbump class. A speed limit v₃ may be chosen from a number of predefined speed limits. This may include a predefined speed limit for the class the speedbump 10 is classified in. For example, class I may define a single predefined speed limit of 35 km/h, class II a single predefined speed limit of 25 km/h, etc. Each class may include a number of predefined speed limits from which one may be chosen according to the speedbump class. This allows to define different speed limits for different sub-classes of each class.

Step S5 calculates, at which strength braking is necessary. This is based on the current vehicle speed v, the distance D to the speedbump 10 and the speed limit v₃ chosen in step S4.

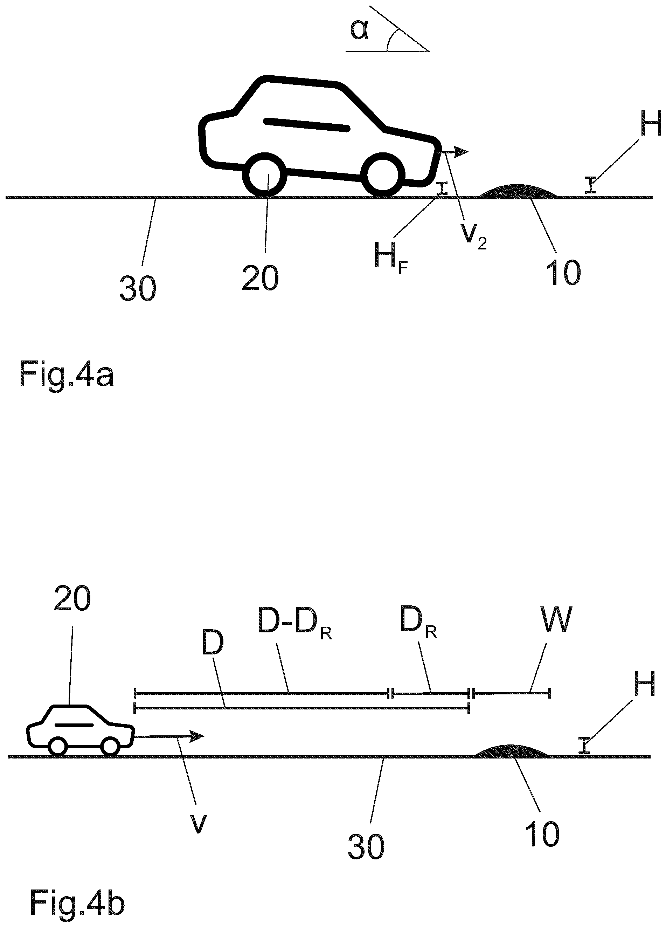

Picking up the example above, if the detected (step S1) speedbump 10 has a determined height between 5 and 10 cm (step S2), its classified as class II (step S3) which defines a single predefined speed limit of 25 km/h that is chosen (step S4) and used for calculation. If the current vehicle speed is 33 km/h and the distance D to the speedbump 10 is 10m, step S5 calculates, at which strength braking is necessary to reach the speed limit of 25 km/h before the vehicle 20 reaches the speedbump 10. Preferably, the necessary braking strength is calculated in such a way that the braking process is finished before the speedbump 10. This may be achieved by including a reserve distance D_{R} into the calculation which refers to an embodiment described in regard to fig. 4b below. The vehicle 20 pitches forward during braking due to inertia, which shifts its weight toward the front wheels. This shift creates a downward force on the front suspension and an upward force on the rear, causing the front to dip and the rear to lift. Driving over the speedbump 10 with a pitch may cause a discomfort to the passengers and shorten the lifetime of vehicle components as it causes extra stress on the suspension. Finishing the braking process before driving over the speedbump 10 prevents this.

In step S6, the vehicle 20 is braked according to the calculated strength. For example, the braking strength is calculated in a way that the braking process takes the time, in which the vehicle 20 covers most of the distance D. This way, the discomfort caused by braking is minimized while the braking process is finished before crossing the speedbump 10. Fig. 3b shows the vehicle 20 during step S6, the vehicle speed v₂ is reduced due to braking and the distance D to the speedbump 10 is covered partially. Fig. 3c shows the vehicle 20 driving over the speedbump 10 after crossing the distance D, the vehicle speed v₃ is equates to the chosen speed limit v₃ achieved by braking.

Fig. 4a shows a situation of the vehicle 20 during braking. Due to braking, the vehicle 20 has a pitch which can be denoted by the angle α. In this case, the angle α denotes the angle between the undercarriage of the vehicle 20 and the track 30. The created force causes the front of the vehicle 20 to dip, reducing the distance H_{F} from the front of the undercarriage to the surface of the track 30. As explained above, driving over the speedbump 10 with the pitch may cause discomfort and worsen component lifetime. Moreover, if the distance H_{F} is less than the height H of the speedbump 10, the vehicle 20 may hit the surface of the speedbump 10 with the undercarriage. This may damage the vehicle 20.

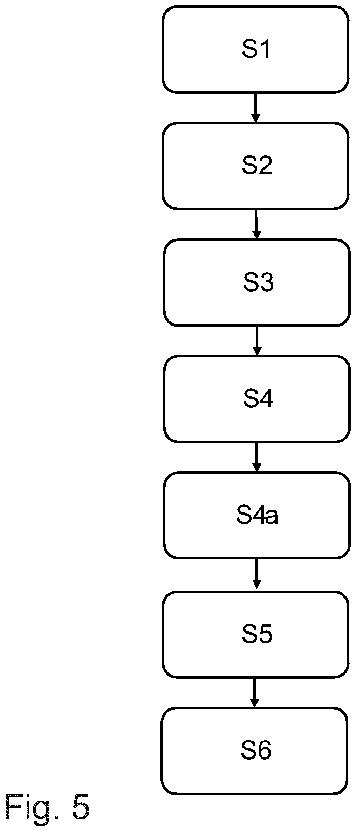

To ensure that the vehicle 20 does not have a pitch when driving over the speedbump 10, an embodiment of the method may include a step 4a which may be executed after step S4 which choses a speed limit v₃, see fig. 5. In step 4a, a reserve distance D_{R}, see fig. 4b is chosen, based on the current vehicle speed v and/or the chosen speed limit v₃ and/or the classified speedbump class. For example, a higher vehicle speed v or a speedbump class which relates to a large speedbump height H may increase the defined reserve distance D_{R}. This reserve distance is subtracted from the distance D to the speedbump 10 which leads to a distance D-D_{R}. This distance is then used for calculating the necessary braking strength in step S5. Accordingly, it is ensured that the braking process is finished before the vehicle 20 drives into the distance D_{R} and the vehicle 20 has enough time to straighten up during driving along the distance D_{R}, increasing the distance H_{F} to the distance during normal driving.

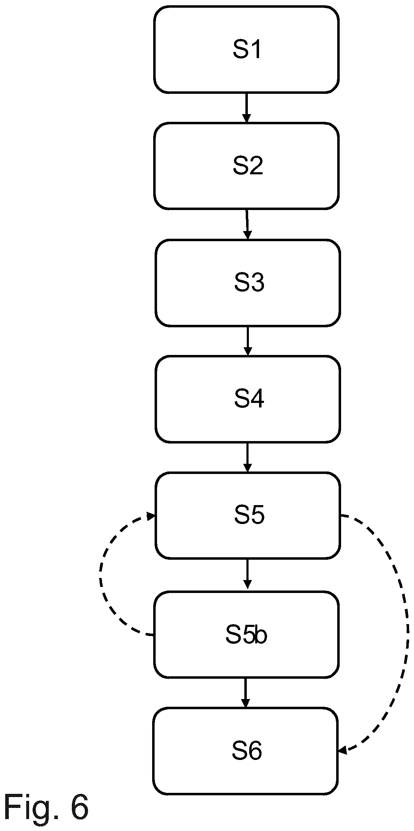

According to an embodiment of the invention which is shown in fig. 6, a step S5b includes calculating a pitch of the vehicle 20 when braking at the calculated strength. Then, it is calculated if - depending on the pitch - a distance of the undercarriage of a front of the vehicle 20 to the ground (which may be H_{F}) is less than a height H defined by the classification of the speedbump 10. If this is the case, the reserve distance D_{R} is subtracted from the distance D to the speedbump 10 and step S5 is repeated and subsequently, step S6 is executed with the recalculated braking strength. If the calculated distance of the of the undercarriage of a front of the vehicle 20 to the ground is larger than a height H defined by the classification of the speedbump 10, the braking strength calculated in step S5 is directly used to brake the vehicle 20 in step S6.

This embodiment allows to mediate between the discomfort caused by an increase braking strength due to a reduced distance D-D_{R} available for the braking process and the discomfort caused by driving over the speedbump 10 with a pitch, also risking that a part of the undercarriage may hit the speedbump 10.

The method is not limited to the embodiments as described but covers all embodiments in the scope of the claims. Moreover, the embodiments may be combined if technically possible.

## Claims

1. Method for controlling a vehicle (20) by an adaptive cruise control system, comprising the steps of
detecting a speedbump (10) located on the track of the vehicle (20);
determining the distance (D) to the speedbump (10), geometry of the speedbump, and the current vehicle speed (v);
classifying the speedbump (10) according to its geometry;
choosing a speed limit (v₃) based on the speedbump class;
calculating, based on the current vehicle speed (v), distance to the speedbump (D; D-D_{R}) and the speed limit (v₃), at which strength braking is necessary;
braking the vehicle (20) according to the calculated strength.

2. Method for controlling a vehicle (20) by an adaptive cruise control system according to claim 1,
further comprising a step of determining if adaptive cruise control is set with a defined speed and
a step of accelerating to the defined speed after detecting that the speedbump (10) has been passed.

3. Method for controlling a vehicle (20) by an adaptive cruise control system according to any of the previous claims;
wherein classifying the speedbump (10) according to its geometry includes classifying it by height (H) and/or width (W) in the driving direction of the vehicle (20) and/or the slope of the approach ramp and/or the slope of the departure ramp.

4. Method for controlling a vehicle (20) by an adaptive cruise control system according to any of the previous claims;
further comprising the steps of
defining a reserve distance (D_{R}) to the speedbump (10) based on the vehicle speed (v) and/or the chosen speed limit (vs) and/or the classified speedbump class; and
substracting the reserve distance (D_{R}) from the distance (D) to the speedbump (10) used for calculating at which strength braking is necessary.

5. Method for controlling a vehicle (20) by an adaptive cruise control system according to claim 4,
wherein defining a reserve distance (D_{R}) includes calculating a pitch (α) of the vehicle (20) when braking at the calculated strength; and
calculating depending on the pitch (α), if a distance (H_{F}) of the undercarriage of a front of the vehicle (20) to the ground (30) is less than a height (H) defined by the classification of the speedbump (10); and if this is true, substracting the reserve distance (D_{R}) from the distance (D) to the speedbump (10) used for calculating at which strength braking is necessary.

6. Method for controlling a vehicle (20) by an adaptive cruise control system according to any of the previous claims;
wherein, a first discomfort value is chosen from a set of predefined values depending on the calculated braking strength; and a second discomfort value is calculated based on the classification of the speedbump (10) and the vehicle speed (v); and if the first discomfort value relates to a larger discomfort than the second discomfort value, braking the vehicle (20) is inhibited.

7. Adaptive cruise control system to control a vehicle (20), including
a sensor configured to detect a speedbump (10) located on the track of the vehicle (20), to determine the distance (D) to the speedbump (10) and to determine the geometry of the speedbump; and
a controller connected to the sensor and configured execute the method according to any one of the claims 1 to 6.

8. Adaptive cruise control system to control a vehicle according to claim 8, wherein the sensor is a camera sensor.

9. Advanced driver assistance system including an adaptive cruise control system according to any one of the claims 7 or 8.
